# EUROPEAN PATENT APPLICATION

(11) **EP 3 498 767 A1**
(43) Date of publication of application: **19.06.2019**
(21) Application number: 17207829.7
(22) Date of filing: 15.12.2017
(51) Int. Cl.: C08K 3/04

(54) **POLYMER COMPOSITES AND PREPARATION THEREOF**

(71) Applicant: Imerys Graphite & Carbon Switzerland Ltd., 6743 Bodio (CH)
(72) Inventor: Bonacchi, Daniele, 6500 Bellinzona (CH)
(74) Representative: Eder, Michael

(57) **Abstract**

Use of a particulate material for preparing a polymer composite material is discussed, wherein the particulate material is characterized by the following parameters: i) an oxygen content of below about 10,000 ppm as measured by IGA; and ii) a particle size distribution (PSD), determined by laser diffraction using the wet dispersion method according to ISO 13320 (2009) / ISO 14887, having a D₉₀ of less than about 25 µm. The particulate material can for example be a fine graphite material. The polymer composites including the particulate material can be used in polymer applications such as automotive parts.

## Description

### FIELD OF THE INVENTION

Embodiments of the present disclosure relate generally to polymer composite materials including particulate materials, including the preparation of such materials and use thereof.

### BACKGROUND

Nucleating agents are useful in a variety of polymer applications. They can be added to polymers, often in relatively small amounts, in order to modify (usually increase) the level of crystallinity of a polymer to enhance certain properties related to the crystallinity. The properties related to the crystallinity include impact strength (Charpy and Izod impact strength), tensile modulus and heat distortion (or heat deflection) temperature (HDT). Another advantage of the addition of nucleating agents to polymers is the increase of the crystallization temperature, which can shorten the injection molding cycle time. Nucleating agents are often small inorganic particles (for example talc) or specific molecules (for example sodium benzoate).

Thus, given the existing benefits of using nucleating agents in polymers, there is an incentive to discover and develop other materials for use as nucleating agents which provide improved polymer properties.

### SUMMARY OF THE DISCLOSURE

The present disclosure includes a particulate material for use in preparing a polymer composite material, and parameters characterizing such particulate material. For example, disclosed herein is a particulate material for preparing a polymer composite material, wherein the polymer composite material comprises from about 0.1 wt % to about 4.9 wt%, or from about 0.1 to 3 wt%, or from about 0.1 to 2 or from about 0.3 to about 1.5 wt% of said particulate material, wherein the particulate material is characterized by the following parameters: an oxygen content of below about 10,000 ppm or below about 7500 ppm, or below about 5000 ppm as measured by interstitial gas analysis (IGA); and a particle size distribution (PSD), as determined by laser diffraction using the wet dispersion method according to ISO 13320 (2009) / ISO 14887, having a D₉₀ of less than about 25 µm; or less than about 20 µm; or less than about 15 µm, or less than about 10 µm.

In a further aspect of the disclosure, the particulate material used for making the polymer composite material may comprise, consist of or consist essentially of agglomerated particles.

In a further aspect, the particulate material used for making the polymer composite material may be carbonaceous.

In a further aspect of the disclosure, the particulate material can be further characterized by any one of the following parameters, alone or in combination: i) a BET specific surface area (BET SSA) of between about 8 and about 50 m²/g; or between about 10 and about 45 m²/g; or between about 15 and about 40 m²/g: ii) a crystallite size L_{c} of below about 150 nm, or below about 140 nm, or below about 120 nm, or below about 100 nm, iii) a crystallite size Lₐ, as measured by Raman spectroscopy, of less than about 60 nm, or less than about 55 nm, or less than about 52 nm; iv) an I_{D}/I_{G} ratio (R(I_{D}/I_{G})), as measured by Raman spectroscopy when measured with a laser having an excitation wavelength of 632.8 nm, of greater than about 0.25, or greater than about 0.26, or greater than about 0.27, or greater than about 0.30; v) a ratio of L_{c}/Lₐ of below about 2.0; or below about 1.8, or below about 1.6; vi) a xylene density of at least about 2.0 g/cm³, or between about 2.0 and about 2.35 g/cm³, or between about 2.2 and about 2.30 g/cm³; vii) a c/2 interlayer distance of between 0.3354 nm and 0.3600 nm, or between about 0.3354 nm and 0.3560 nm, or between about 0.3354 nm and 0.3520 nm; viii) a spring-back of less than about 25%, or less than about 15%, or less than about 14%, or less than about 13%, or less than about 12%, or less than about 10%; ix) an oil absorption value, of greater than about 90 ml/100g, or greater than about 100 ml/100g, or greater than about 120 ml/100g, or greater than about 140 ml/100g (as measured according to ASTM D2414-01, see method described below); and/or x) a polycyclic aromatic hydrocarbon (PAH) concentration of less than about 10 ppm or less than about 5 ppm or less than about 3 ppm.

A further aspect of the disclosure includes a method of making a polymer composite or a polymeric automotive part by incorporating from about 0.1 wt % to about 4.9 wt%, or from about 0.1 to 3 wt%, or from about 0.1 to 2 or from about 0.3 to about 1.5 wt% of the particulate material.

In a further aspect of the disclosure, the polymer can be a thermoplastic polymer, a thermosetting polymer, or a synthetic or natural rubber, optionally wherein the polymer is selected from the group consisting of polyolefin based thermoplastic elastomers such as low density polyethylene, high density polyethylene, or polypropylene, polyamides, polyesters, polycarbonate, polyketones, polystyrene, polymethylmethacrylate, polyphenylene sulfides, polyphenylene oxides, polysulfones, polyarylates, polyetheretherketones, polyetherimides, thermoplastic elastomers, polylactic acids, polyoxymethylenes, polyvinyl chloride, polybutene, acrylonitrile-butadiene-styrene copolymers, styrene-acrylonitrile copolymers, polytetrafluoroethylene, polyvinylidenefluoride, ethylenetetrafluoroethylene, polyvinylfluoride, urethane based thermoplastic elastomers, ester-ether based thermoplastic elastomers, amide based thermoplastic elastomers, styrene based thermoplastic elastomers, butadiene rubber, chlorinated polyethylene rubber, chloroprene rubber, ethylene-propylene-diene rubber, hydrogenated acrylonitrile-butadiene rubber, acrylonitrile-butadiene rubber, natural rubber, silicone rubber, styrene-butadiene rubber, epoxy resins, melamine-formaldehyde resin, phenol-formaldehyde resin, polyurethane, urea formaldehyde resin, unsaturated polyester resins, and any mixture or blend thereof.

### BRIEF DESCRIPTION OF THE DRAWINGS

The accompanying drawings, which are incorporated in and constitute a part of this specification, illustrate various exemplary aspects of the disclosure, and together with the description, serve to explain the principles of the present disclosure.
Fig. 1 shows tensile modulus measured for Samples 1-4.
Fig. 2 shows tensile strength measured for Samples 1-4.
Fig. 3 shows elongation measured for Samples 1-4.
Fig. 4 shows Charpy impact (notched) for Samples 1-4 and polypropylene homopolymer alone.
Fig. 5 shows Charpy impact (unnotched) for Samples 1-4 and polypropylene homopolymer alone.
Fig. 6 shows crystallization onset temperature for Samples 1-4 and polypropylene homopolymer alone.
Fig. 7 shows Charpy impact (notched) for unmodified LLDPE, and LLDPE including 1 wt% of Sample 1 and LLDPE including 1 wt% of Sample 2.
Fig. 8 shows Charpy impact (low viscosity and notched) for unmodified HDPE, and HDPE including 1 wt% of Sample 1 and HDPE including 1 wt% of Sample 2.

### DETAILED DESCRIPTION

Particular aspects of the present disclosure are described in greater detail below. The terms and definitions provided herein control, if in conflict with terms and/or definitions incorporated by reference.

In the Summary above and in the Detailed Description, and the claims below, and in the accompanying drawings, reference is made to particular features (including method steps) of the disclosure. It is understood that the present disclosure includes all possible combinations of such particular features. For example; where a particular feature is disclosed in the context of a particular aspect or embodiment, or a particular claim, that feature can also be used, to the extent possible in combination with and additionally or alternatively in the context of other particular aspects or embodiments of the disclosure and, in the disclosure generally.

As used herein, the terms "comprises," "comprising," or any other variation thereof are intended to cover a non-exclusive inclusion, such that a process, method, composition, article, or apparatus that comprises a list of elements does not include only those elements, but may include other elements not expressly listed or inherent to such process, method, composition, article, or apparatus. The term "exemplary" is used in the sense of "example" rather than "ideal."

As used herein, the singular forms "a," "an," and "the" include plural reference unless the context dictates otherwise. The terms "approximately" and "about" refer to being nearly the same as a referenced number or value. As used herein, the terms "approximately" and "about" should be understood to encompass ± 5% of a specified amount or value.

When a range is used herein as "ranging from (a first number)" to (a second number)," "between (a first number) and (a second number)," or "(a first number)-(a second number)," this refers to a range whose lower limit is the first number, and whose upper limit is the second number. As used herein, the term "at least" followed by a number denotes the start of a range beginning with that number, which may be a range having an upper limit or no upper limit depending on the variable term being defined. For example, "at least 1" includes 1 and more than 1.

### Measurement Methods

The percentage (%) values specified herein are by weight, unless specified otherwise.

### Specific BET Surface Area

The method is based on the registration of the absorption isotherm of liquid nitrogen in the range p/p0=0.04-0.26, at 77 K. The nitrogen gas adsorption is performed on a Quantachrome Autosorb-1. Following the procedure proposed by Brunauer, Emmet and Teller (Adsorption of Gases in Multimolecular Layers, J. Am. Chem. Soc., 1938, 60, 309-15 319), the monolayer capacity can be determined. On the basis of the cross-sectional area of the nitrogen molecule, the monolayer capacity and the weight of sample, the specific surface can then be calculated. Reference: Ravikovitch, P., Vishnyakov, A., Russo, R., Neimark, A., Langmuir 16 (2000) 2311-2320; Jagiello, J., Thommes, M., Carbon 42 (2004) 1227-1232.

### Particle Size Distribution (PSD)

The presence of particles within a coherent light beam causes diffraction. The dimensions of the diffraction pattern are correlated with the particle size. A parallel beam from a low-power laser lights up a cell which contains the sample suspended in water. The beam leaving the cell is focused by an optical system. The distribution of the light energy in the focal plane of the system is then analyzed. The electrical signals provided by the optical detectors are transformed into particle size distribution by means of a calculator. The method yields the proportion of the total volume of particles to a discrete number of size classes forming a volumetric particle size distribution (PSD). The particle size distribution is typically defined by the values D₁₀, D₅₀ and D₉₀, wherein 10 percent (by volume) of the particle population has a size below the D₁₀ value, 50 percent (by volume) of the particle population has a size below the D₅₀ value and 90 percent (by volume) of the particle population has a size below the D₉₀ value. The particle size distribution data by laser diffraction quoted herein have been measured with a MALVERN Mastersizer S. For determining the PSD, a small sample of a carbon material is mixed with a few drops of wetting agent and a small amount of water. The sample prepared in the described manner is introduced in the storage vessel of the apparatus (MALVERN Mastersizer S) and after 5 minutes of ultrasonic treatment at an intensity of 100% and the pump and stirrer speed set at 40%, a measurement is taken. References: ISO 13320 (2009) / ISO 14887

### Oxygen Content

Oxygen mass fractions in solid samples are evaluated using the principles of inert gas fusion or solid carrier gas heat extraction. The sample is placed in a graphite crucible and inserted into an electrode furnace. The crucible is maintained between the upper and lower electrodes of an impulse furnace. A high current passes through the crucible after purging with inert gas (He or Ar) creating an increase of the temperature (above 2500 °C). Gases generated in the furnace are released into flowing inert gas stream. The gas stream is then sent to the appropriate infrared (O as CO by NDIR) or thermal conductivity (N and H by TCD) detectors for measurement. Instrument calibrations are performed using known reference materials.

### Oil Absorption Value

The oil absorption test is a means to determine the general behavior of graphite and graphite-type materials in respect of absorption of liquids. A slow filter paper is placed into a centrifuge metal tube having an inner diameter of 13.5 mm and a sieve on the bottom (18 mesh). In order to wet the filter, 0.5 g of paraffinic oil is filled into the tube and centrifuged for 30 minutes at 521 g (1 g = 9.81 m/s², corresponding to 1500 rpm in the Sigma 6-10 centrifuge). After the wetting procedure, the tube is weighed and 0.5 g of graphite powder is added. The graphite is covered with 1.5 g of paraffinic oil and centrifuged for 90 minutes at 521 g. After centrifuging, the tube is weighed. The oil absorption per 100 g of graphite powder is calculated on the basis of the weight increase.

### Crystallite Size Lₐ

[00102] Crystallite size Lₐ is calculated from Raman measurements using equation: Lₐ[Angstrom (A)]= C x (IG/ID) where constant C has values 44[A] and 58[A] for lasers with wavelength of 514.5 nm and 632.8 nm, respectively. IG and ID are the intensity of the G- and D-band Raman absorption peaks at 1580 cm-1 and 1320 cm-1, respectively.

### Crystallite Size L_{c}

Crystallite size L_{c} is determined by analysis of the (002) and (004) diffraction profiles. For the present invention, the method suggested by Iwashita (N. Iwashita, C. Rae Park, H. Fujimoto, M. Shiraishi and M. Inagaki, Carbon 42, 701-714 (2004)) is used. The algorithm proposed by Iwashita has been specifically developed for carbon materials. The widths of the line profiles at the half maximum of sample and reference are measured. By means of a correction function, the width of pure diffraction profile can be determined. The crystallite size is subsequently calculated by applying Scherrer's equation (P. Scherrer, Gottinger-Nachrichten 2 (1918) p. 98).

### Interlayer Spacing c/2

The interlayer space c/2 is determined by X-ray diffractometry. The angular position of the peak maximum of the (002) diffraction profiles are determined and, by applying the Bragg equation, the interlayer spacing is calculated. The carbon sample is mixed with a silicon standard. A mixture of polyglycol and ethanol is added in order to obtain a highly viscous slurry. Subsequently, a thin layer of approx. 150 µm is applied to a glass plate and dried. A Cu Kα X-ray beam is used. Reference: Klug and Alexander, X-Ray diffraction Procedures John Wiley and Sons Inc., New York London (1967)

### Spring-back

Spring-back is a source of information regarding the resilience of compacted graphite powders. A defined amount of powder is poured into a die. After inserting the punch and sealing the die, air is evacuated from the die. A compression force of about 1.5 tons/cm² is applied and the powder height is recorded. This height is recorded again after pressure has been released. Spring-back is the height difference in percent relative to the height under pressure.

### Xylene Density

The density is obtained by xylene displacement. Approx. 2.5 g (accuracy 0.1 mg) of powder is weighed in a pycnometer. Xylene is added under vacuum. After a few hours dwell time under normal pressure, the pycnometer is filled up, conditioned and weighed. The density represents the ratio between mass of graphite and the displaced volume of xylene. The values is reported in g/cm³.

### PAH

PAH profile was carried out with a toluene extract applying a stable isotope dilution methodology with gas chromatography coupled with a mass spectrometer (GC-MS) analysis following an internal test method (PAH -0397) of the Biochemical Institute for environmental carcinogenics.

### Volume Resistivity

Volume resistivity on the compression molded or the injection molded plastic plaques is measured according to ASTM D257.

### Thermal Conductivity

Thermal conductivity on the compounds is measured by laserflash technique according to ASTM E1416.

The present disclosure includes particulate materials useful in preparing a polymer composite material. The polymer composite material can comprise from about 0.1 wt % to about 4.9 wt%, or from about 0.1 to 3 wt%, or from about 0.1 to 2 or from about 0.3 to about 1.5 wt% of the particulate material. The particulate material can be characterized by the following parameters: an oxygen content of below about 10,000 ppm or below about 7500 ppm, or below about 5000 ppm, as measured by interstitial gas analysis (IGA); and a particle size distribution (PSD) by laser diffraction using the wet dispersion method according to ISO 13320 (2009) / ISO 14887, having a D₉₀ of less than about 25 µm; or less than about 20 µm; or less than about 15 µm, or less than about 10 µm.

The particulate material used for making the polymer composite material may in some embodiments comprise, consist of, or consist essentially of agglomerated particles. Fine particulate materials as referred to herein may often be characterized by a low apparent density. Since such materials are often somewhat difficult to handle, they may therefore be transformed (e.g. by suitable granulation techniques) into relatively soft agglomerates / granules, which are larger in size compared to the primary (non-agglomerated) particles and typically possess a higher bulk density, thereby improving the handling properties of the material. However, it will be understood that such agglomerates must be soft enough to deagglomerate when they are added to the polymer matrix, i.e. the agglomerates are no longer present in the resulting polymer composite material, as the shear forces during the mixing / compounding process "dissolves" (i.e. de-agglomerates) the agglomerates back into "primary" non-agglomerated particles.

As explained in the Methods section below, the use of laser diffraction and the wet dispersion method according to ISO 13320 (2009) in combination with ISO 14887 to determine the PSD values of the particulate material ensures that any (soft) agglomerates are effectively de-agglomerated during sample preparation by wet dispersion. Accordingly, this method effectively determines the PSD of the primary / non-agglomerated particles (i.e. in their form as later present in the polymer matrix), even if the particulate material is employed in agglomerated form (which may exhibit a larger particle size when determined by a different method that leaves the agglomerates intact). Soft agglomerated carbonaceous particles, including methods to produce such agglomerated particles have for example been described in WO 2010/020099, which is incorporated herein by reference in its entirety.

In some embodiments; the particulate material for use in the polymer composite material may be carbonaceous.

In accordance with the embodiments described herein, the particulate material for use in the polymer composite material is further characterized by any one of the following parameters, alone or in combination: a BET specific surface area (BET SSA) of between about 8 and about 50 m²/g; or between about 10 and about 45 m²/g; or between about 15 and about 40 m²/g: a crystallite size L_{c} of below about 150 nm, or below about 140 nm, or below about 120 nm, or below about 100 nm; a crystallite size Lₐ, as measured by Raman spectroscopy, of less than about 60 nm, or less than about 55 nm, or less than about 52 nm; an I_{D}/I_{G} ratio (R(I_{D}/I_{G})), as measured by Raman spectroscopy when measured with a laser having an excitation wavelength of 632.8 nm, of greater than about 0.25, or greater than about 0.26, or greater than about 0.27, or greater than about 0.30; a ratio of L_{c}/Lₐ of below about 2.0; or below about 1.8, or below about 1.6; and a xylene density of at least about 2.0 g/cm³, or between about 2.0 and about 2.35 g/cm³, or between about 2.2 and about 2.30 g/cm³.

In accordance with the embodiments described herein, the particulate material for use in the polymer composite material is further characterized by any one of the following parameters, alone or in combination: a c/2 interlayer distance of between 0.3354 nm and 0.3600 nm, or between about 0.3354 nm and 0.3560 nm, or between about 0.3354 nm and 0.3520 nm; a spring-back of less than about 25%, or less than about 15%, or less than about 14%, or less than about 13%, or less than about 12%, or less than about 10%; an oil absorption value of greater than about 90 ml/100g, or greater than about 100 ml/100g, or greater than about 120 ml/100g, or greater than about 140 ml/100g; a polycyclic aromatic hydrocarbon (PAH) concentration of less than about 10 ppm or less than about 5 ppm or less than about 3 ppm.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; a particle size distribution (PSD) having a D₉₀ of less than about 25 µm; or less than about 20 µm; or less than about 15 µm, or less than about 10 µm; a BET specific surface area (BET SSA) of between about 8 and about 50 m²/g; or between about 10 and about 45 m²/g; or between about 15 and about 40 m²/g.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; a particle size distribution (PSD) having a D₉₀ of less than about 25 µm; or less than about 20 µm; or less than about 15 µm, or less than about 10 µm; and a crystallite size L_{c} of below about 150 nm, or below about 140 nm, or below about 120 nm, or below about 100 nm.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; a particle size distribution (PSD) having a D₉₀ of less than about 25 µm; or less than about 20 µm; or less than about 15 µm, or less than about 10 µm; a crystallite size Lₐ, as measured by Raman spectroscopy, of less than about 60 nm, or less than about 55 nm, or less than about 52 nm.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; and a particle size distribution (PSD) having a D₉₀ of less than about 25 µm; or less than about 20 µm; or less than about 15 µm, or less than about 10 µm; an I_{D}/I_{G} ratio (R(I_{D}/I_{G})), as measured by Raman spectroscopy when measured with a laser having an excitation wavelength of 632.8 nm, of greater than about 0.25, or greater than about 0.26, or greater than about 0.27, or greater than about 0.30.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; and a particle size distribution (PSD) having a D₉₀ of less than about 25 µm; or less than about 20 µm; or less than about 15 µm, or less than about 10 µm; a ratio of L_{c}/Lₐ of below about 2.0; or below about 1.8, or below about 1.6.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; and a particle size distribution (PSD) having a D₉₀ of less than about 25 µm; or less than about 20 µm; or less than about 15 µm, or less than about 10 µm; and a xylene density of at least about 2.0 g/cm³, or between about 2.0 and about 2.35 g/cm³, or between about 2.2 and about 2.30 g/cm³.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; and a particle size distribution (PSD) having a D₉₀ of less than about 25 µm; or less than about 20 µm; or less than about 15 µm, or less than about 10 µm; a c/2 interlayer distance of between 0.3354 nm and 0.3600 nm, or between about 0.3354 nm and 0.3560 nm, or between about 0.3354 nm and 0.3520 nm.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; and a particle size distribution (PSD) having a D₉₀ of less than about 25 µm; or less than about 20 µm; or less than about 15 µm, or less than about 10 µm; and a spring-back of less than about 25%, or less than about 15%, or less than about 14%, or less than about 13%, or less than about 12%, or less than about 10%.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; and a particle size distribution (PSD) having a D₉₀ of less than about 25 µm; or less than about 20 µm; or less than about 15 µm, or less than about 10 µm; and an oil absorption value of greater than about 90 ml/100g, or greater than about 100 ml/100g, or greater than about 120 ml/100g, or greater than about 140 ml/100g.

In accordance with the embodiments described herein, the particulate material useful in the polymer composite material can be characterized by any one of the following parameters, alone or in combination: an oxygen content of below about 10,000 ppm or below about 7500 ppm, or below about 5000 ppm, as measured by IGA; and a particle size distribution (PSD) having a D₉₀ of less than about 25 µm; or less than about 20 µm; or less than about 15 µm, or less than about 10 µm; and a polycyclic aromatic hydrocarbon (PAH) concentration of less than about 10 ppm or less than about 5 ppm or less than about 3 ppm.

In accordance with the embodiments described herein, the particulate material can be selected from the group consisting of amorphous carbon, coke, calcined coke, natural graphite, synthetic graphite, surface-modified graphite, expanded ground graphite, graphene, carbon nanotubes, and combinations thereof.

In accordance with the embodiments described herein, the use of the particulate material as defined throughout the description can increase the impact strength of the polymer composite material as described herein, wherein the polymer composite material can comprise between from about 0.1 wt % to about 4.9 wt%, or from about 0.1 to about 3 wt%, or from about 0.1 to about 2 or from about 0.3 to about 1.5 wt% of the particulate material; and/or b) the polymer composite material has a volume resistivity of above 10⁵ Ohm*cm, or above 10⁹ Ohm*cm; and/or c) the polymer composite material has a thermal conductivity of below about 0.6 W/m*k, or below about 0.8 W/m*k.

In accordance with the embodiments described herein, the use of the particulate material in preparation of the polymer composite material as defined throughout the description can increase the resistance to light degradation and/or UV resistance of a polymer composite material, wherein the polymer composite material can comprise from about 0.1 wt % to about 4.9 wt%, or from about 0.1 to about 3 wt%, or from about 0.1 to about 2 or from about 0.3 to about 1.5 wt% of the particulate material. The refractive index of the particulate material at 400nm wavelength can be above about 2.6 or above about 4.

In accordance with the embodiments described herein, the polymer can be a thermoplastic polymer, a thermosetting polymer, or a synthetic or natural rubber, optionally wherein the polymer is selected from the group consisting of polyolefin based thermoplastic elastomers such as low density polyethylene, high density polyethylene, or polypropylene, polyamides, polyesters, polycarbonate, polyketones, polystyrene, polymethylmethacrylate, polyphenylene sulfides, polyphenylene oxides, polysulfones, polyarylates, polyetheretherketones, polyetherimides, thermoplastic elastomers, polylactic acids, polyoxymethylenes, polyvinyl chloride, polybutene, acrylonitrile-butadiene-styrene copolymers, styrene-acrylonitrile copolymers, polytetrafluoroethylene, polyvinylidenefluoride, ethylenetetrafluoroethylene, polyvinylfluoride, urethane based thermoplastic elastomers, ester-ether based thermoplastic elastomers, amide based thermoplastic elastomers, styrene based thermoplastic elastomers, butadiene rubber, chlorinated polyethylene rubber, chloroprene rubber, ethylene-propylene-diene rubber, hydrogenated acrylonitrile-butadiene rubber, acrylonitrile-butadiene rubber, natural rubber, silicone rubber, styrene-butadiene rubber, epoxy resins, melamine-formaldehyde resin, phenol-formaldehyde resin, polyurethane, urea formaldehyde resin, unsaturated polyester resins, and any mixture or blend thereof.

In accordance with the embodiments described herein, a polymeric automotive part can be made from the polymer composite material as described throughout the description. The polymeric composite material, which can be used as a component of a polymeric automotive part, can have a notched Charpy impact strength according to ISO 179-1:2010 of at least 5%, or 10%, or 15% or 20% or 30% or 40% higher than the impact strength of the same polymer composite material without the particulate material.

In accordance with the embodiments described herein, the present disclosure includes a method of making a polymer composite or a polymeric automotive part by incorporating from about 0.1 wt % to about 4.9 wt%, or from about 0.1 to about 3 wt%, or from about 0.1 to about 2 or from about 0.3 to about 1.5 wt% of the particulate material into the polymer composite material.

Other aspects and embodiments of the present disclosure will be apparent to those skilled in the art from consideration of the specification and practice of the embodiments disclosed herein.

### EXAMPLES

The following examples are intended to illustrate the present disclosure without, however, being limiting in nature. It is understood that the present disclosure encompasses additional aspects and embodiments consistent with the foregoing description and following examples.

### Example 1

Studies were performed to prepare, characterize, and test the performance of various materials (Samples 1-4) for suitability as particulate material additives to a polymer. Properties for Samples 1-4 are shown below in Table 1.

**TABLE 1**

| Property | Sample 1 (Talc) | Sample 2 (graphite) | Sample 3 (graphite) | Sample 4 (graphite) |
|---|---|---|---|---|
| Xylene density (9/cm³) | 2.78 | 2.24 | 2.256 | 2.248 |
| Oxygen content (ppm) | 430,000 | 3900 | 2600 | 990 |
| BET (m²/g) | 16.9 | 26.9 | 20.9 | 9.1 |
| L_{C} (nm) | NA | 47 | 73 | 154 |
| C/2 (nm) | NA | 0.336 | 0.3359 | 0.3355 |
| PSD D₅₀ (microns) | 4.6 | 2.0 | 3.3 | 18.4 |

| | | | | |
|---|---|---|---|---|
| * Determined by interpretation of the (002) and (004) diffraction profiles using the method described in the following reference, incorporated herein by reference: N. Iwashita, et al., Carbon 42, 701-714 (2004). | | | | |

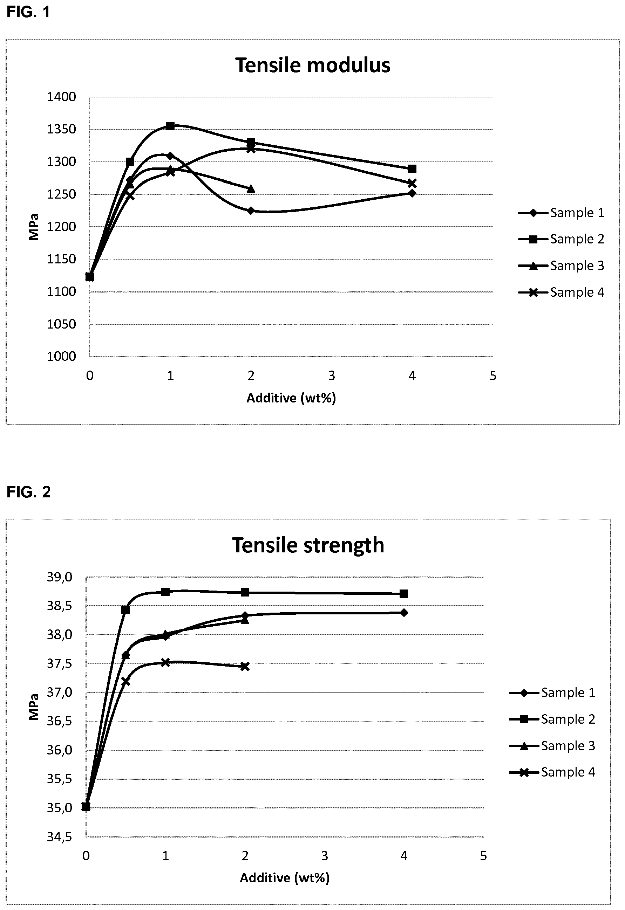

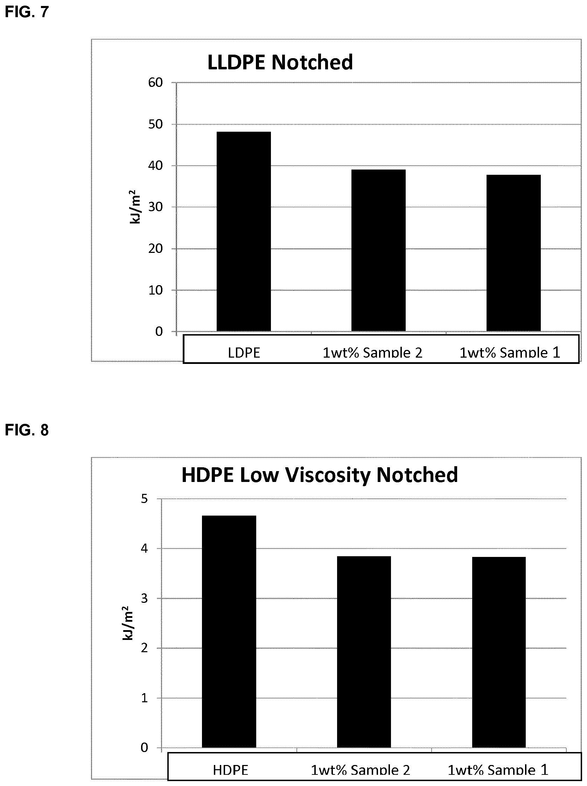

The tested polymer for Figures 1-6 was polypropylene homopolymer (PP-h), and for Figures 7 and 8 linear low density polyethylene (LLDPE) and high density polyethylene (HDPE), respectively. Tensile modulus, Tensile strength and Elongation at break were measured by Universal tensile machine Instron 5500R according to ISO standard 527 and Charpy impact, notched and unnotched, were measured by Instron/CEAST 9050 impact tester according to ISO:179. Crystallization on set temperature was measured for Samples 1-4 by analysis of the differential scanning calorimetry (DSC) peak obtained with a NETZSCH STA449C calorimeter at a 5K/min cooling rate. The results of such tests are shown in Figures 1 to 8 and Table 2.

**TABLE 2**

| | **Crystalline onset temperature (°C)** | **Melting Temperature (°C)** |
|---|---|---|
| PP-h | 122.7 | 164.4 |
| PP-h + 1wt% Sample 1 | 129.6 | 163 |
| PP-h + 1wt% Sample 2 | 130.2 | 154.7 |
| PP-h + 1wt% Sample 3 | 131.3 | 163.3 |
| PP-h + 1wt% Sample 4 | 130.1 | 163 |

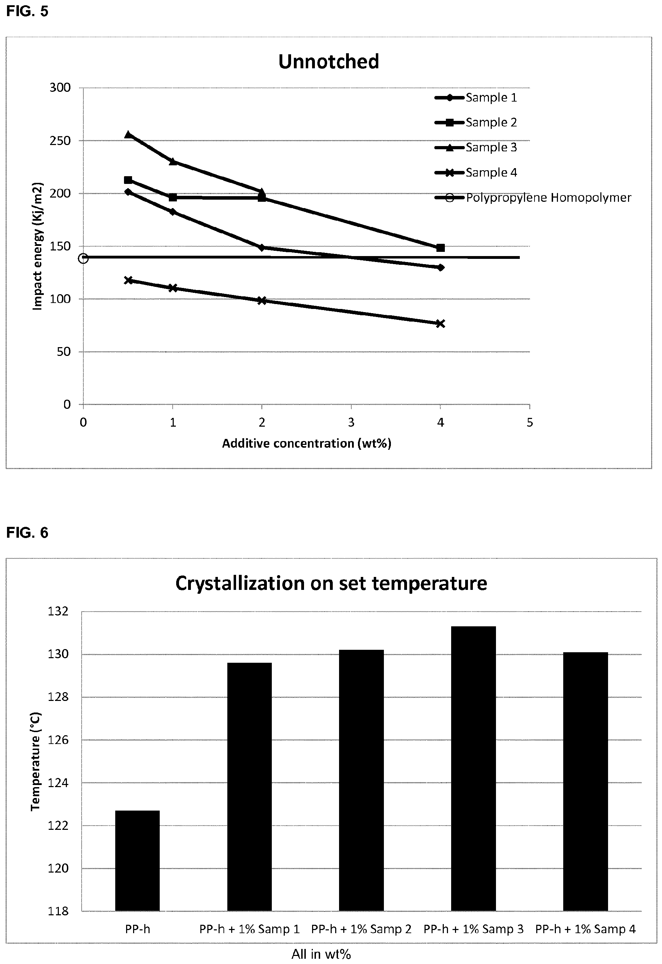

It was found that very fine graphite (Sample 2 - D₉₀ of 4.7 microns, and Sample 3 - D₉₀ of 6.5 microns) act as a nucleating agent (similarly to Sample 1 - talc). It was also surprisingly found that in polypropylene some of the mechanical properties of the final polymer composite material were increased for Samples 2 and 3 as compared to polymer composite materials including either talc of Sample 1 or the larger graphite particles of Sample 4. It was also found that crystallization temperature, as shown in Table 2 and in Figure 6, was shown to increase for Samples 2-4 over that for PP-h alone or with talc in Sample 1.

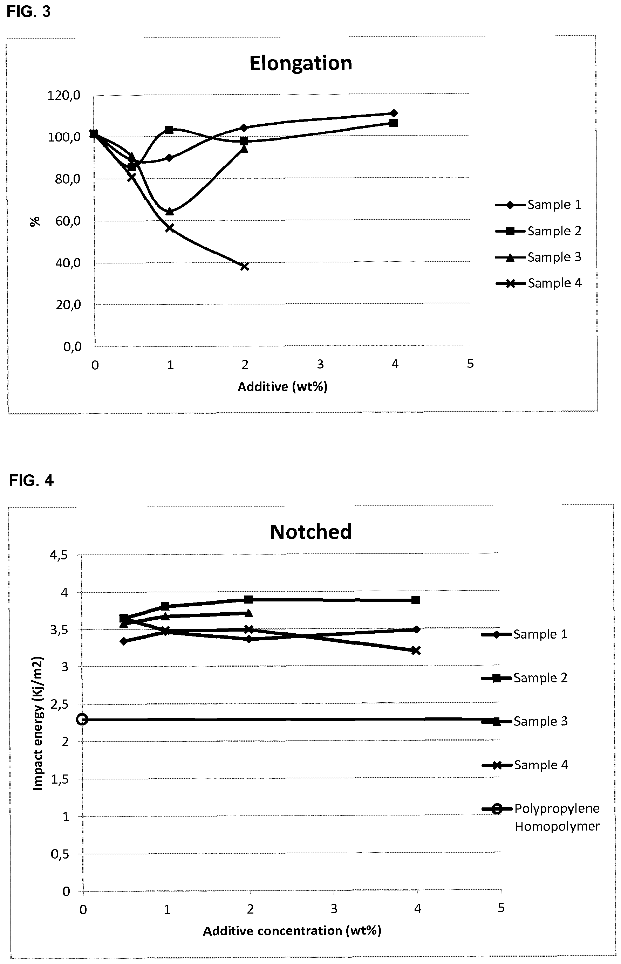

It is clearly visible from Figure 2 that the increase of the tensile strength of Sample 2 over that of Sample 1 (talc) and Sample 4) compounds and the increase of elongation at break compared to the larger KS 44. Even most important from a technological point of view is that the Samples 2 and 3 compounds also have higher impact properties (Notched and Unnotched Charpy) as shown in Figures 4 and 5.

The Examples demonstrate that fine graphite is useful and unexpectedly beneficial as a nucleating agent for polymer composites.

It is intended that the specification and examples therein be considered as exemplary only, with a true scope and spirit of the present disclosure being indicated by the following claims.

## Claims

1. Use of a particulate material for preparing a polymer composite material, wherein the polymer composite material comprises from about 0.1 wt % to about 4.9 wt%, or from about 0.1 to about 3 wt% of said particulate material,
wherein the particulate material is **characterized by** the following parameters:
(i) an oxygen content of below about 10,000 ppm as measured by interstitial gas analysis (IGA); and
(ii) a particle size distribution (PSD), determined by laser diffraction using the wet dispersion method according to ISO 13320 (2009) / ISO 14887, having a D₉₀ of less than about 25 µm; or less than about 20 µm; or less than about 15 µm, or less than about 10 µm.

2. The use according to claim 1, wherein the particulate material used to prepare the polymer composite material comprises agglomerated particles.

3. The use according to claim 1 or claim 2, wherein the particulate material is carbonaceous.

4. The use according to any one of claims 1 to 3, wherein the particulate material is further **characterized by** any one of the following parameters, alone or in combination:
(i) a BET specific surface area (BET SSA) of between about 8 and about 50 m²/g; or between about 10 and about 45 m²/g; or between about 15 and about 40 m²/g;
(ii) a crystallite size L_{c} of below about 150 nm, or below about 140 nm, or below about 120 nm, or below about 100 nm;
(iii) a crystallite size Lₐ, as measured by Raman spectroscopy, of less than about 60 nm, or less than about 55 nm, or less than about 52 nm;
(iv) an I_{D}/I_{G} ratio (R(I_{D}/I_{G})), as measured by Raman spectroscopy when measured with a laser having an excitation wavelength of 632.8 nm, of greater than about 0.25, or greater than about 0.26, or greater than about 0.27, or greater than about 0.30;
(v) a ratio of L_{c}/Lₐ of below about 2.0; or below about 1.8, or below about 1.6;
(vi) a xylene density of at least about 2.0 g/cm³, or between about 2.0 and about 2.35 g/cm³, or between about 2.2 and about 2.30 g/cm³.

5. The use according to any one of claims 1 to 4, wherein the particulate material is further **characterized by** any one of the following parameters, alone or in combination:
(vii) a c/2 interlayer distance of between 0.3354 nm and 0.3600 nm, or between about 0.3354 nm and 0.3560 nm, or between about 0.3354 nm and 0.3520 nm;
(viii) a spring-back of less than about 25%, or less than about 15%, or less than about 14%, or less than about 13%, or less than about 12%, or less than about 10%;
(ix) an oil absorption value of greater than about 90 ml/100g, or greater than about 100 ml/100g, or greater than about 120 ml/100g, or greater than about 140 ml/100g;
(x) a polycyclic aromatic hydrocarbon (PAH) concentration of less than about 10 ppm.

6. The use according to any one of the claims 1 to 5, wherein the particulate material is selected from the group consisting of amorphous carbon, coke, calcined coke, natural graphite, synthetic graphite, surface-modified graphite, expanded ground graphite, graphene, carbon nanotubes, and combinations thereof.

7. The use according to any one of the claims 1 to 5, wherein the particulate material is natural graphite, synthetic graphite, surface-modified graphite, expanded ground graphite, and combinations thereof.

8. Use of a particulate material as defined in any one of claims 1 to 7 to increase the impact strength of a polymer composite material, wherein
a) the polymer composite material comprises from about 0.1 wt% to about 4.9 wt% of said particulate material; and/or
b) the polymer composite material has a volume resistivity of above 10⁵ Ohm*cm, or above 10⁹ Ohm*cm; and/or
c) the polymer composite material has a thermal conductivity of below about 0.6 W/m*k.

9. Use of a particulate material as defined in any one of claims 1 to 7 to increase the resistance to light degradation and/or UV resistance of a polymer composite material, wherein the polymer composite material comprises from about 0.1 wt% to about 4.9 wt% of said particulate material.

10. The use according to any one of the claims 1 to 9, wherein the polymer is a thermoplastic polymer, a thermosetting polymer, or a synthetic or natural rubber, optionally wherein the polymer is selected from the group consisting of polyolefin based thermoplastic elastomers such as low density polyethylene, high density polyethylene, or polypropylene, polyamides, polyesters, polycarbonate, polyketones, polystyrene, polymethylmethacrylate, polyphenylene sulfides, polyphenylene oxides, polysulfones, polyarylates, polyetheretherketones, polyetherimides, thermoplastic elastomers, polylactic acids, polyoxymethylenes, polyvinyl chloride, polybutene, acrylonitrile-butadiene-styrene copolymers, styrene-acrylonitrile copolymers, polytetrafluoroethylene, polyvinylidenefluoride, ethylenetetrafluoroethylene, polyvinylfluoride, urethane based thermoplastic elastomers, ester-ether based thermoplastic elastomers, amide based thermoplastic elastomers, styrene based thermoplastic elastomers, butadiene rubber, chlorinated polyethylene rubber, chloroprene rubber, ethylene-propylene-diene rubber, hydrogenated acrylonitrile-butadiene rubber, acrylonitrile-butadiene rubber, natural rubber, silicone rubber, styrene-butadiene rubber, epoxy resins, melamine-formaldehyde resin, phenol-formaldehyde resin, polyurethane, urea formaldehyde resin, unsaturated polyester resins, and any mixture or blend thereof.

11. A polymer composite or a polymeric automotive part comprising from about 0.1 wt % to about 4.9 wt%, or from about 0.1 to 3 wt% of the particulate material as defined in any one of claims 1 to 7.

12. The polymer composite or polymeric automotive part according to claim 11, wherein the notched Charpy impact strength according to ISO 179-1:2010 of the polymer composite is at least 5%, or 10%, or 15% or 20% or 30% or 40% higher than the impact strength of the same polymer without said particulate material.

13. The polymer composite or polymeric automotive part according to claim 11 or claim 12, wherein the polymer is a thermoplastic polymer, a thermosetting polymer, or a synthetic or natural rubber, optionally wherein the polymer is selected from the group consisting of polyolefin based thermoplastic elastomers such as low density polyethylene, high density polyethylene, or polypropylene, polyamides, polyesters, polycarbonate, polyketones, polystyrene, polymethylmethacrylate, polyphenylene sulfides, polyphenylene oxides, polysulfones, polyarylates, polyetheretherketones, polyetherimides, thermoplastic elastomers, polylactic acids, polyoxymethylenes, polyvinyl chloride, polybutene, acrylonitrile-butadiene-styrene copolymers, styrene-acrylonitrile copolymers, polytetrafluoroethylene, polyvinylidenefluoride, ethylenetetrafluoroethylene, polyvinylfluoride, urethane based thermoplastic elastomers, ester-ether based thermoplastic elastomers, amide based thermoplastic elastomers, styrene based thermoplastic elastomers, butadiene rubber, chlorinated polyethylene rubber, chloroprene rubber, ethylene-propylene-diene rubber, hydrogenated acrylonitrile-butadiene rubber, acrylonitrile-butadiene rubber, natural rubber, silicone rubber, styrene-butadiene rubber, epoxy resins, melamine-formaldehyde resin, phenol-formaldehyde resin, polyurethane, urea formaldehyde resin, unsaturated polyester resins, and any mixture or blend thereof.

14. A method of making a polymer composite or a polymeric automotive part by incorporating from about 0.1 wt % to about 4.9 wt%, or from about 0.1 to 3 wt% of the particulate material as defined in any one of claims 1 to 7 into a polymer.

15. The method according to claim 14 wherein the polymer is a thermoplastic polymer, a thermosetting polymer, or a synthetic or natural rubber, optionally wherein the polymer is selected from the group consisting of polyolefin based thermoplastic elastomers such as low density polyethylene, high density polyethylene, or polypropylene, polyamides, polyesters, polycarbonate, polyketones, polystyrene, polymethylmethacrylate, polyphenylene sulfides, polyphenylene oxides, polysulfones, polyarylates, polyetheretherketones, polyetherimides, thermoplastic elastomers, polylactic acids, polyoxymethylenes, polyvinyl chloride, polybutene, acrylonitrile-butadiene-styrene copolymers, styrene-acrylonitrile copolymers, polytetrafluoroethylene, polyvinylidenefluoride, ethylenetetrafluoroethylene, polyvinylfluoride, urethane based thermoplastic elastomers, ester-ether based thermoplastic elastomers, amide based thermoplastic elastomers, styrene based thermoplastic elastomers, butadiene rubber, chlorinated polyethylene rubber, chloroprene rubber, ethylene-propylene-diene rubber, hydrogenated acrylonitrile-butadiene rubber, acrylonitrile-butadiene rubber, natural rubber, silicone rubber, styrene-butadiene rubber, epoxy resins, melamine-formaldehyde resin, phenol-formaldehyde resin, polyurethane, urea formaldehyde resin, unsaturated polyester resins, and any mixture or blend thereof.
